# EUROPEAN PATENT APPLICATION

(11) **EP 3 751 952 A1**
(43) Date of publication of application: **16.12.2020**
(21) Application number: 19760172.7
(22) Date of filing: 27.02.2019
(51) Int. Cl.: H04W 76/18, H04W 4/021

(54) **INFORMATION MAINTENANCE CONTROL METHOD AND USER EQUIPMENT**

(30) Priority: 02.03.2018 CN 201810176128
(71) Applicant: HUAWEI TECHNOLOGIES CO., LTD., Shenzhen, Guangdong 518129 (CN)
(72) Inventor: WU, Mai, Shenzhen, Guangdong 518129 (CN); SHU, Lin, Shenzhen, Guangdong 518129 (CN)
(74) Representative: Gill Jennings & Every LLP
(86) International application number: PCT/CN2019/076337
(87) International publication number: WO 2019/165977

(57) **Abstract**

Embodiments of this application disclose an information maintenance control method and user equipment. The user equipment starts at least one timer, where the at least one timer is used to indicate forbidden duration of an area in which the user equipment receives a non-integrity protected reject message during registration. The user equipment deletes information about a first area in a target forbidden list and retains information about a second area in the target forbidden list if the at least one timer expires. The first area is the area in which the user equipment receives the non-integrity protected reject message during registration, and the second area is an area in which the user equipment receives an integrity protected reject message during registration.

## Description

This application claims priority to Chinese Patent Application No. 201810176128.1, filed with the Chinese Patent Office on March 2, 2018 and entitled "INFORMATION MAINTENANCE CONTROL METHOD AND USER EQUIPMENT", which is incorporated herein by reference in its entirety.

### TECHNICAL FIELD

This application relates to the communications field, and in particular, to an information maintenance control method and user equipment.

### BACKGROUND

As wireless communications technologies rapidly develop, network security is always a topic of particular concern to users. In the 3GPP R13 protocol, a solution for preventing a denial-of-service (denial of service, DOS) attack is proposed to prevent a malicious network from attacking user equipment.

The user equipment (user equipment, UE) includes a list of forbidden location areas for roaming (a list of "forbidden location areas for roaming"), a list of forbidden location areas for regional provision of service (a list of "forbidden location areas for regional provision of service"), a list of forbidden tracking areas for roaming (a list of "forbidden tracking areas for roaming"), and a list of forbidden tracking areas for regional provision of service (a list of "forbidden tracking areas for regional provision of service"). Hereinafter, the list of forbidden location areas for roaming and the list of forbidden location areas for regional provision of service may be collectively referred to as a list of forbidden location areas, and the list of forbidden tracking areas for roaming and the list of forbidden tracking areas for regional provision of service may be collectively referred to as a list of forbidden tracking areas.

When the user equipment performs location area updating (location area updating, LAU) or tracking area updating (tracking area updating, TAU), if the updating is rejected by a network device, the user equipment receives a location updating reject (LOCATION UPDATING REJECT) message or tracking area update reject (TRACKING AREA UPDATE REJECT) message sent by the network device, where the location updating reject message and the tracking area update reject message are hereinafter collectively referred to as a reject message. The reject message carries a reject cause of the network device. The user equipment adds, to the corresponding list of forbidden location areas or list of forbidden tracking areas based on the reject cause, a location area identity (location area identity, LAI) or tracking area identity (tracking area identity, TAI) that is received on a broadcast control channel (broadcast control channel, BCCH) and that triggers a location updating request or tracking area update request. The LAI includes a mobile country code (mobile country code, MCC), a mobile network code (mobile network code, MNC), and a location area code (location area code, LAC). A public land mobile network (public land mobile network, PLMN) includes the MCC and the MNC. In other words, the LAI includes the PLMN and the LAC. The TAI includes the MCC, the MNC, and a tracking area code (tracking area code, TAC). In other words, the TAI includes the PLMN and the TAC.

The reject message sent by the network device to the user equipment is integrity protected or is not integrity protected. For example, a reject cause value is #13. If the user equipment receives the reject message that is integrity protected and is sent by the network device, the user equipment may determine that roaming is not allowed in a current location area (location area, LA) or tracking area (tracking area, TA), and the user equipment may add a current LAI or TAI to the list of forbidden location areas for roaming or list of forbidden tracking areas for roaming. The list of forbidden location areas for roaming or list of forbidden tracking areas for roaming is usually deleted by the user equipment when the user equipment is powered off, or when a SIM card is removed, or 12 to 24 hours after the list is created. In a period in which the list of forbidden location areas for roaming or list of forbidden tracking areas for roaming is not deleted, the user equipment does not attempt to search for a suitable cell in the LA or TA, or attempt to select a PLMN corresponding to the LA or TA. If the user equipment receives the reject message that is not integrity protected and is sent by the network device, the user equipment may be attacked by a malicious network although roaming is allowed in a current LA or TA. In this case, the user equipment may add a current LAI or TAI to the list of forbidden location areas for roaming or list of forbidden tracking areas for roaming, and start a list deletion timer T3247, where duration is a random value ranging from 30 to 60 minutes. When the timer T3247 expires, the user equipment clears the entire list of forbidden location areas for roaming or list of forbidden tracking areas for roaming. When performing network reselection, the user equipment may attempt to search for a suitable cell in the LA or TA, or attempt to select a PLMN corresponding to the LA or TA.

In the prior art, when T3247 expires, the user equipment clears information in the corresponding entire list of forbidden location areas or list of forbidden tracking areas, to delete all LAIs or TAIs in the list, including a LAI or TAI that is added to the list of forbidden location areas or list of forbidden tracking areas because the user equipment receives, during registration, a reject message that is integrity protected and is sent by the network device. When restarting a network selection procedure, the user equipment attempts to search for a cell or PLMN corresponding to the LAI or TAI. However, the cell or PLMN corresponding to the LAI or TAI cannot be accessed by the user equipment. This increases a quantity of invalid attempts.

### SUMMARY

Embodiments of this application provide an information maintenance control method and user equipment. When T3247 expires, the user equipment retains information, in a forbidden list, about an area in which the user equipment receives an integrity protected reject message during registration. In this way, the user equipment does not attempt to search for a cell or PLMN corresponding to the area. This reduces a quantity of invalid attempts of the user equipment on the network.

A first aspect of the embodiments of this application provides an information maintenance control method, including:

User equipment may perform location updating, where the location updating may be location area updating or tracking area updating. The location updating may be area registration performed after the user equipment is powered on and selects a PLMN and a cell, or area registration performed by the user equipment after the user equipment reselects a cell, where a location area or tracking area of the reselected cell is different from that of an original camped-on cell. The user equipment may send a location updating request message or tracking area update request message to a network device. After receiving the request message, the network device may reject the location updating of the user equipment based on a specific situation, and send a location updating reject message or tracking area update reject message to the network device.

When the user equipment registers with an area, if the user equipment receives a reject message (which may be a location updating reject or tracking area update reject message and is not specifically limited) sent by the network device, the user equipment may determine whether the network device and the user equipment undergo a security mode control procedure. If the network device does not initiate the security mode control procedure, the user equipment determines that the reject message is not integrity protected. In other words, when registering with the area, the user equipment receives a non-integrity protected reject message sent by the network device. On the contrary, if the network device initiates the security mode control procedure, the user equipment determines that the reject message is integrity protected. In other words, when registering with the area, the user equipment receives an integrity protected reject message sent by the network device.

The user equipment may start at least one timer, where the at least one timer is used to indicate forbidden duration of an area in which the user equipment receives a non-integrity protected reject message during registration, and the at least one timer may be used to indicate forbidden duration of a first area. It may be understood that the user equipment may start one or more timers. This is not specifically limited herein.

Optionally, the at least one timer may be started under a trigger condition. The user equipment may start the at least one timer after receiving a non-integrity protected reject message during location area registration, or the user equipment may start the at least one timer after receiving a non-integrity protected reject message in another process, or the user equipment may start the at least one timer because another timer expires.

If the at least one timer expires, the user equipment may delete information about the first area in a target forbidden list and retain information about a second area in the target forbidden list. The first area is the area in which the user equipment receives the non-integrity protected reject message during registration, and the second area is an area in which the user equipment receives an integrity protected reject message during registration. The first area may be one or more areas. This is not specifically limited herein. The second area may be one or more areas. This is not specifically limited herein. The first area and the second area may be location areas, or the first area and the second area may be tracking areas. This is not specifically limited herein.

The user equipment starts the at least one timer, where the at least one timer is used to indicate the forbidden duration of the area in which the user equipment receives the non-integrity protected reject message during registration. If the at least one timer expires, the user equipment deletes the information about the first area in the target forbidden list and retains the information about the second area in the target forbidden list. When T3247 expires, the user equipment retains information, in the forbidden list, about the area in which the user equipment receives the integrity protected reject message during registration. In this way, the user equipment does not attempt to search for a cell or PLMN corresponding to the area. This reduces a quantity of invalid attempts of the user equipment on the network.

According to the first aspect of the embodiments of this application, in a first implementation of the first aspect of the embodiments of this application, before the user equipment starts the at least one timer, the method further includes:
when registering with the first area, receiving, by the user equipment, the non-integrity protected reject message sent by the network device.

Before the user equipment deletes the information about the first area in the target forbidden list and retains the information about the second area in the target forbidden list if the at least one timer expires, the method further includes:
storing, by the user equipment, the information about the first area and a first category identifier into the target forbidden list based on the non-integrity protected reject message, where the first category identifier is used to indicate that the user equipment receives, during area registration, the non-integrity protected reject message sent by the network device, and the first category identifier corresponds to the information about the first area.

In this embodiment of this application, when registering with the first area, the user equipment receives the non-integrity protected reject message sent by the network device, and stores the information about the first area and the first category identifier into the target forbidden list based on the non-integrity protected reject message. This improves implementability of the solution.

According to the first aspect of the embodiments of this application, in a second implementation of the first aspect of the embodiments of this application, before the user equipment deletes the information about the first area in the target forbidden list and retains the information about the second area in the target forbidden list if the at least one timer expires, the method further includes:
when registering with the second area, receiving, by the user equipment, the integrity protected reject message sent by the network device; and
storing, by the user equipment, the information about the second area and a second category identifier into the target forbidden list based on the integrity protected reject message, where the second category identifier is used to indicate that the user equipment receives, during area registration, the integrity protected reject message sent by the network device, and the second category identifier corresponds to the information about the second area.

In this embodiment of this application, when registering with the second area, the user equipment receives the integrity protected reject message sent by the network device, and stores the information about the second area and the second category identifier into the target forbidden list based on the integrity protected reject message. This improves implementability of the solution.

According to the first aspect of the embodiments of this application, in a third implementation of the first aspect of the embodiments of this application, the at least one timer includes a first timer and a second timer, where the first timer is different from the second timer. The first timer is used to indicate the forbidden duration of the first area, and the second timer is used to indicate forbidden duration of a third area in which the user equipment receives a non-integrity protected reject message during registration.

That the user equipment starts the at least one timer includes:
starting, by the user equipment, the first timer; and
starting, by the user equipment, the second timer.

Before the starting, by the user equipment, the first timer, the method further includes:
when registering with the first area, receiving, by the user equipment, a first non-integrity protected reject message sent by the network device.

If the first timer expires, before the user equipment deletes the information about the first area in the target forbidden list and retains the information about the second area in the target forbidden list, the method further includes:
storing, by the user equipment, the information about the first area, a first category identifier, and an identifier of the first timer into the target forbidden list based on the first non-integrity protected reject message, where the first category identifier is used to indicate that the user equipment receives, during area registration, the non-integrity protected reject message sent by the network device, the first category identifier corresponds to the information about the first area, the identifier of the first timer is used to indicate the first timer, and the identifier of the first timer corresponds to the information about the first area.

Before the starting, by the user equipment, the second timer, the method further includes:
when registering with the third area, receiving, by the user equipment, a second non-integrity protected reject message sent by the network device.

If the first timer expires, before the user equipment deletes the information about the first area in the target forbidden list and retains the information about the second area in the target forbidden list, the method further includes:
storing, by the user equipment, information about the third area, the first category identifier, and an identifier of the second timer into the target forbidden list based on the second non-integrity protected reject message, where the first category identifier corresponds to the information about the third area, the identifier of the second timer is used to indicate the second timer, and the identifier of the second timer corresponds to the information about the third area.

In this embodiment of this application, the at least one timer includes the first timer and the second timer. This improves flexibility of the solution. When registering with the first area, the user equipment receives the non-integrity protected reject message sent by the network device, and stores the information about the first area, the first category identifier, and the identifier of the first timer into the target forbidden list based on the non-integrity protected reject message. When registering with the third area, the user equipment receives the non-integrity protected reject message sent by the network device, and stores the information about the third area, the first category identifier, and the identifier of the second timer into the target forbidden list based on the non-integrity protected reject message. This improves flexibility of the solution.

According to the third implementation of the first aspect of the embodiments of this application, in a fourth implementation of the first aspect of the embodiments of this application, the method further includes:
if the first timer expires but the second timer does not expire, retaining, by the user equipment, the information about the third area in the target forbidden list based on the second timer; or
if the first timer expires and the second timer expires, deleting, by the user equipment, the information about the third area in the target forbidden list based on the second timer.

In this embodiment of this application, when the first timer expires, the user equipment may determine, depending on whether the second timer expires, whether to delete the information, about the third area, corresponding to the second timer. This improves flexibility of the solution.

A second aspect of the embodiments of this application provides an information maintenance control method, including:

User equipment may perform location updating, where the location updating may be location area updating or tracking area updating. The location updating may be area registration performed after the user equipment is powered on and selects a PLMN and a cell; or area registration performed by the user equipment after the user equipment reselects a cell, where a location area or tracking area of the reselected cell is different from that of an original camped-on cell. The user equipment may send a location updating request message or tracking area update request message to a network device. After receiving the request message, the network device may reject the location updating of the user equipment based on a specific situation, and send a location updating reject message or tracking area update reject message to the network device.

When the user equipment registers with an area, if the user equipment receives a reject message (which may be a location updating reject or tracking area update reject message and is not specifically limited) sent by the network device, the user equipment may determine whether the network device and the user equipment undergo a security mode control procedure. If the network device does not initiate the security mode control procedure, the user equipment determines that the reject message is not integrity protected. In other words, when registering with the area, the user equipment receives a non-integrity protected reject message sent by the network device. On the contrary, if the network device initiates the security mode control procedure, the user equipment determines that the reject message is integrity protected. In other words, when registering with the area, the user equipment receives an integrity protected reject message sent by the network device.

The user equipment may start at least one timer, where the at least one timer is used to indicate forbidden duration of an area in which the user equipment receives a non-integrity protected reject message during registration, and the at least one timer may be used to indicate forbidden duration of a first area. It may be understood that the user equipment may start one or more timers. This is not specifically limited herein.

Optionally, the at least one timer may be started under a trigger condition. The user equipment may start the at least one timer after receiving a non-integrity protected reject message during location area registration, or the user equipment may start the at least one timer after receiving a non-integrity protected reject message in another process, or the user equipment may start the at least one timer because another timer expires.

If the at least one timer expires, the user equipment may delete information about the first area in a first forbidden list and retain information about a second area in a second forbidden list. The first area is the area in which the user equipment receives the non-integrity protected reject message during registration, and the second area is an area in which the user equipment receives an integrity protected reject message during registration. The first area may be one or more areas. This is not specifically limited herein. The second area may be one or more areas. This is not specifically limited herein. The first area and the second area may be location areas, or the first area and the second area may be tracking areas. This is not specifically limited herein.

The user equipment starts the at least one timer, where the at least one timer is used to indicate the forbidden duration of the area in which the user equipment receives the non-integrity protected reject message during registration. If the at least one timer expires, the user equipment deletes the information about the first area in the first forbidden list and retains the information about the second area in the second forbidden list. When T3247 expires, the user equipment retains information, in the forbidden list, about the area in which the user equipment receives the integrity protected reject message during registration. In this way, the user equipment does not attempt to search for a cell or PLMN corresponding to the area. This reduces a quantity of invalid attempts of the user equipment on the network.

According to the second aspect of the embodiments of this application, in a first implementation of the second aspect of the embodiments of this application, before the user equipment starts the at least one timer, the method further includes:
when registering with the first area, receiving, by the user equipment, the non-integrity protected reject message sent by the network device.

Before the user equipment deletes the information about the first area in the first forbidden list and retains the information about the second area in the second forbidden list if the at least one timer expires, the method further includes:
storing, by the user equipment, the information about the first area into the first forbidden list based on the non-integrity protected reject message.

In this embodiment of this application, when registering with the first area, the user equipment receives the non-integrity protected reject message sent by the network device, and stores the information about the first area into the first forbidden list based on the non-integrity protected reject message. This improves implementability of the solution.

According to the second aspect of the embodiments of this application, in a second implementation of the second aspect of the embodiments of this application, before the user equipment deletes the information about the first area in the first forbidden list and retains the information about the second area in the second forbidden list if the at least one timer expires, the method further includes:
when registering with the second area, receiving, by the user equipment, the integrity protected reject message sent by the network device; and
storing, by the user equipment, the information about the second area into the second forbidden list based on the integrity protected reject message.

In this embodiment of this application, when registering with the second area, the user equipment receives the integrity protected reject message sent by the network device, and stores the information about the second area into the second forbidden list based on the integrity protected reject message. This improves implementability of the solution.

According to the second aspect of the embodiments of this application, in a third implementation of the second aspect of the embodiments of this application, the at least one timer includes a first timer and a second timer, where the first timer is different from the second timer. The first timer is used to indicate the forbidden duration of the first area, and the second timer is used to indicate forbidden duration of a third area in which the user equipment receives a non-integrity protected reject message during registration.

That the user equipment starts the at least one timer includes:
starting, by the user equipment, the first timer; and
starting, by the user equipment, the second timer.

Before the starting, by the user equipment, the first timer, the method further includes:
when registering with the first area, receiving, by the user equipment, a first non-integrity protected reject message sent by the network device.

If the first timer expires, before the user equipment deletes the information about the first area in the first forbidden list and retains the information about the second area in the second forbidden list, the method further includes:
storing, by the user equipment, the information about the first area and an identifier of the first timer into the first forbidden list based on the first non-integrity protected reject message, where the identifier of the first timer is used to indicate the first timer, and the identifier of the first timer corresponds to the information about the first area.

Before the starting, by the user equipment, the second timer, the method further includes:
when registering with the third area, receiving, by the user equipment, a second non-integrity protected reject message sent by the network device.

If the first timer expires, before the user equipment deletes the information about the first area in the first forbidden list and retains the information about the second area in the second forbidden list, the method further includes:
storing, by the user equipment, information about the third area and an identifier of the second timer into the first forbidden list based on the second non-integrity protected reject message, where the identifier of the second timer is used to indicate the second timer, and the identifier of the second timer corresponds to the information about the third area.

In this embodiment of this application, the at least one timer includes the first timer and the second timer. This improves flexibility of the solution. When registering with the first area, the user equipment receives the non-integrity protected reject message sent by the network device, and stores the information about the first area and the identifier of the first timer into the first forbidden list based on the non-integrity protected reject message. When registering with the third area, the user equipment receives the non-integrity protected reject message sent by the network device, and stores the information about the third area and the identifier of the second timer into the first forbidden list based on the non-integrity protected reject message. This improves flexibility of the solution.

According to the third implementation of the second aspect of the embodiments of this application, in a fourth implementation of the second aspect of the embodiments of this application, the method further includes:
if the first timer expires but the second timer does not expire, retaining, by the user equipment, the information about the third area in the first forbidden list based on the second timer; or
if the first timer expires and the second timer expires, deleting, by the user equipment, the information about the third area in the first forbidden list based on the second timer.

In this embodiment of this application, when the first timer expires, the user equipment may determine, depending on whether the second timer expires, whether to delete the information, about the third area, corresponding to the second timer. This improves flexibility of the solution.

A third aspect of the embodiments of this application provides user equipment. The user equipment has a function of implementing behavior of the user equipment in the first aspect and the second aspect. The function may be implemented by hardware, or may be implemented by hardware executing corresponding software. The hardware or the software includes one or more modules corresponding to the function.

A fourth aspect of the embodiments of this application provides a computer storage medium. The computer storage medium is configured to store a computer software instruction used by the user equipment in the third aspect, and the computer software instruction includes a program designed for the user equipment.

A fifth aspect of the embodiments of this application provides a computer program product. The computer program product includes a computer software instruction. The computer software instruction may be loaded by a processor to implement a procedure of the method in the first aspect and the second aspect.

### BRIEF DESCRIPTION OF DRAWINGS

FIG. 1a is a schematic diagram of an architecture of an information maintenance control system according to an embodiment of this application;
FIG. 1b is a schematic diagram of an architecture of another information maintenance control system according to an embodiment of this application;
FIG. 2 is a schematic diagram of behavior of UE in idle mode according to an embodiment of this application;
FIG. 3 is a schematic diagram of a security mode control procedure according to an embodiment of this application;
FIG. 4 is a schematic diagram of an embodiment of an information maintenance control method according to an embodiment of this application;
FIG. 5 is a schematic diagram of another embodiment of an information maintenance control method according to an embodiment of this application;
FIG. 6 is a schematic diagram of still another embodiment of an information maintenance control method according to an embodiment of this application;
FIG. 7 is a schematic diagram of yet another embodiment of an information maintenance control method according to an embodiment of this application;
FIG. 8 is a schematic diagram of still yet another embodiment of an information maintenance control method according to an embodiment of this application;
FIG. 9 is a schematic diagram of an embodiment of user equipment according to an embodiment of this application; and
FIG. 10 is a schematic diagram of another embodiment of user equipment according to an embodiment of this application.

### DESCRIPTION OF EMBODIMENTS

Embodiments of this application provide an information maintenance control method and user equipment. When T3247 expires, the user equipment retains information, in a forbidden list, about an area in which the user equipment receives an integrity protected reject message during registration. In this way, the user equipment does not attempt to search for a cell or PLMN corresponding to the area. This reduces a quantity of invalid attempts of the user equipment on the network.

To help a person skilled in the art understand the technical solutions in the present invention better, the following clearly and completely describes the technical solutions in the embodiments of the present invention with reference to the accompanying drawings in the embodiments of the present invention. It is clear that, the described embodiments are merely some rather than all of the embodiments of the present invention. All the embodiments based on the present invention shall fall within the protection scope of the present invention.

A technology described in this specification may be applied to various communications systems, for example, a second generation (2G) mobile communications system, a third generation (3G) mobile communications system, a next generation communications system, a global system for mobile communications (global system for mobile communications, GSM), a code division multiple access (code division multiple access, CDMA) system, a time division multiple access (time division multiple access, TDMA) system, a wideband code division multiple access (wideband code division multiple access wireless, WCDMA) system, a frequency division multiple access (frequency division multiple addressing, FDMA) system, an orthogonal frequency-division multiple access (orthogonal frequency-division multiple access, OFDMA) system, a single-carrier frequency division multiple access (SC-FDMA) system, a general packet radio service (General Packet Radio Service, GPRS) system, a long term evolution (Long Term Evolution, LTE) system, and other such communications systems.

The following describes some terms in the embodiments of the present invention, to help a person skilled in the art have a better understanding.
(1) User equipment is a device that provides a user with voice and/or data connectivity, for example, may be a handheld device with a wireless connection function, or a processing device connected to a wireless modem. The user equipment may communicate with a core network over a radio access network (radio access network, RAN), and exchange voice and/or data with the RAN. The user equipment may alternatively be a wireless terminal device, a mobile terminal device, a subscriber unit (subscriber unit), a subscriber station (subscriber station), a mobile station (mobile station), a mobile station (mobile), a remote station (remote station), an access point (access point, AP), a remote terminal device (remote terminal), an access terminal device (access terminal), a user terminal device (user terminal), a user agent (user agent), a user device (user device), or the like. The user equipment may alternatively be a mobile phone (or referred to as a "cellular" phone), a computer with a mobile terminal device, or a portable, pocket-sized, handheld, computer built-in, or in-vehicle mobile apparatus. For example, the user equipment may be a personal communication service (personal communication service, PCS) phone, a cordless phone, a session initiation protocol (SIP) phone, a wireless local loop (wireless local loop, WLL) station, a personal digital assistant (personal digital assistant, PDA), a subscriber unit (subscriber unit), a personal computer (personal computer), a laptop computer (laptop computer), a tablet computer (tablet computer), a netbook (Netbook), a handheld (Handheld) device, a data card (Data Card), a USB insertion device, a mobile Wi-Fi hotspot device (MiFi Devices), or a wearable device (Wearable Devices) such as a smartwatch/smart glasses.
(2) A network device includes, for example, an access network device and a core network device. The access network device includes, for example, a base station (for example, an access point), and may specifically be a device that communicates with a wireless terminal device in one or more sectors over an air interface on an access network. The base station may be configured to perform conversion between a received radio frame and an internet protocol (IP) packet and serve as a router between the wireless terminal device and a rest portion of the access network, where the rest portion of the access network may include an IP network. The base station may further coordinate attribute management of the air interface. For example, the base station may be a radio network controller (radio network controller, RNC), a base station controller (base station controller, BSC), or an evolved NodeB (NodeB, eNB, e-NodeB, or evolutional Node B) in an LTE-advanced (LTE-Advanced, LTE-A) system. This is not limited in the embodiments of the present invention.

The core network device includes, for example, a mobility management network element. The mobility management network element includes, for example, a mobility management entity (mobility management entity, MME), a serving general packet radio service support node (serving general packet radio service support Node, SGSN), or a mobile switching center (mobile switching centre, MSC)/visitor location register (visitors location register, VLR). The MSC and the VLR are usually deployed as one network element, referred to as the MSC/VLR, or referred to as a VLR for short. Alternatively, the mobility management network element may include another type of device or the like.

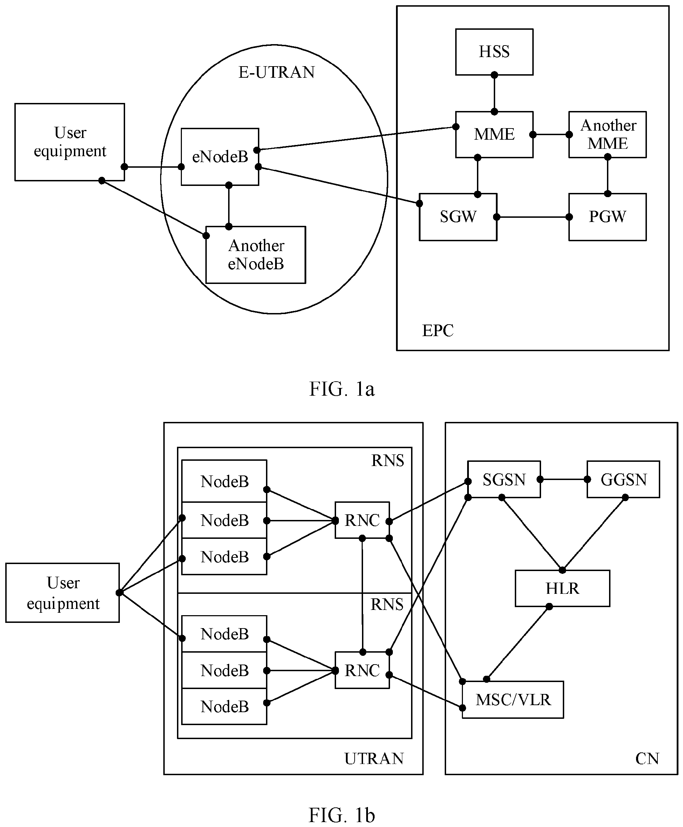

Referring to FIG. 1a, an architecture of an information maintenance control system may include user equipment and network devices. The network devices may include an evolved UMTS terrestrial radio access network (evolved UMTS terrestrial radio access network, E-UTRAN) device and an evolved packet core (evolved packet core, EPC) device. The E-UTRAN device includes a base station eNodeB and another eNodeB. The eNodeB provides access for the user equipment to an EPC, and performs MME selection when the user equipment attaches, scheduling and transmission of paging information, scheduling and transmission of broadcast information, and the like. The eNodeB may be connected to the EPC.

The EPC device may be connected to a plurality of eNodeBs. The EPC device may include an MME, a home subscriber server (home subscriber server, HSS), another MME, a serving gateway (serving gateway, SGW), and a PDN gateway (PDN gateway, PGW). The MME is a key control node on an LTE access network, and is responsible for positioning, paging, and the like of the user equipment in idle mode. The HSS may perform identity authentication and authorization on the user equipment, and may provide information about a physical location of the user equipment. The network device needs to clearly learn current location information of the user equipment. A location area on the EPC network is referred to as a tracking area (tracking area, TA), used for user mobility management in an EPC system. The user equipment notifies the network device of a TA in which the user equipment is currently located, and the MME and the HSS record the TA. In the EPC, IP packets of all user equipments are sent through the SGW. The SGW is connected to the PGW, and the PGW provides a function of user equipment IP address assignment and another function.

Referring to FIG. 1b, an architecture of another information maintenance control system may include user equipment and network devices. The network devices may include a UMTS terrestrial radio access network (UMTS terrestrial radio access network, UTRAN) device and a core network (core network, CN) device. The UTRAN device may include a plurality of radio network subsystems (radio network subsystem, RNS), and each RNS is controlled by an RNC. The UTRAN device may include a plurality of RNCs. The RNC is responsible for allocating, configuring, and releasing radio resources in the RNS, and responsible for mobility management, call processing, link management, and a handover mechanism. The RNC may be connected to another RNC through various types of interfaces (such as a direct physical connection or virtual network), and the RNC may be connected to a CN network.

The CN device may be connected to a plurality of access network devices. The CN device includes a circuit switched (circuit switched, CS) domain device and a packet switched (packet switch, PS) domain device. The CS domain device may include an MSC and a VLR. The PS domain device may include an SGSN and a gateway GPRS support node (gateway GPRS support node, GGSN). Some devices such as a home location register (home location register, HLR) and the VLR may be shared by a CS domain and a PS domain. One or more RNCs may be connected to the MSC. The MSC can control call establishment, call routing, and a UE mobility function. The MSC may include a VLR that includes user-related information when UE is within a coverage area of the MSC. The VLR stores information that needs to be retrieved for an incoming call or outgoing call of user equipment in an area managed by the VLR, and information of a user subscription service and an additional service, for example, parameters such as a number of a user, an identity of a location area in which the user is located, and a service provided for the user; and may assist the MSC in recording related information about all user equipments within a current coverage area. The HLR may store information such as location information, service data, and account management of all user equipments subscribed to the HLR, and may provide query and modification of the location information of the user equipments in real time, and implement various service operations, including location updating, call processing, authentication, supplementary services, and the like, to implement mobility management of user equipment on a mobile communications network. The network device needs to clearly learn current location information of user equipment. A location area (location area, LA) and a routing area (router area, RA) (which is associated with a PS domain service and is a subdivision of the LA) on the CN network are used for user mobility management on the CN network. The user equipment notifies the network device of an LA in which the user equipment is currently located, and the HLR and the VLR record the LA. The SGSN mainly implements functions such as packet routing and forwarding, mobility management, session management, logical link management, authentication and encryption, and call detail record generation and output. The GGSN mainly serves as a gateway and may be connected to various types of data networks. The GGSN can cooperate with the SGSN to implement the mobility management function, where the mobility management function is mainly a location management function for user equipment when the user equipment logs in to different SGSNs.

It may be understood that FIG. 1a and FIG. 1b are merely schematic diagrams of an architecture of an information maintenance control system, and constitute no limitation on the architecture of the information maintenance control system.

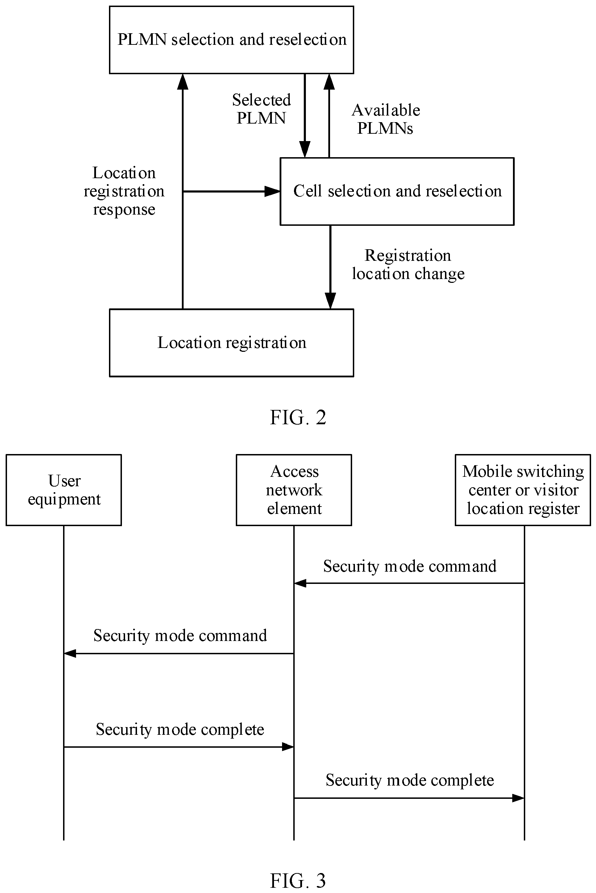

After user equipment is powered on or when user equipment is roaming, a primary task of the user equipment is to find a network and contact a network device to obtain a service of the network device. Behavior of the user equipment in idle mode may be classified into PLMN selection and reselection, cell selection and reselection, and location registration. For a relationship between the three processes, refer to FIG. 2. After being powered on, the user equipment may select a PLMN. After selecting the PLMN, the user equipment may start to select a cell belonging to the PLMN. After finding such a cell, the user equipment may learn information about neighboring cells from system information (broadcast) of the cell, and then may select a cell with best signal quality from these cells for camping on. The user equipment may initiate a location registration process, and the network device obtains location information of the user equipment. After location registration succeeds, the user equipment may successfully camp on the cell. After the user equipment camps on the cell and successfully registers with the cell, as the user equipment moves, signal strength of the current cell and signal strength of neighboring cells keep changing, and the user equipment may select a most suitable cell. In other words, the user equipment may perform a cell reselection process. During cell reselection, after the user equipment selects another cell, if the user equipment finds that the cell belongs to another LA/RA or TA, the user equipment may initiate a location update process, and the network device obtains latest location information of the user equipment.

Location updating may include location area updating and tracking area updating. A location area update/tracking area update process is always initiated by the user equipment, and is implemented through logical cooperation between entities such as an HLR and an MSC/VLR, or an HSS and an MME. The location area updating may include normal location area registration, periodic location area registration, user data deletion, and the like. A condition that causes the user equipment to perform normal location area registration is usually a location change caused when the user equipment is powered on or when the user equipment roams. The user equipment performs periodic location area registration to notify the network device that the user equipment is not powered off, and a PLMN operator can keep track of a current status of the user equipment, and especially keep a contact between the network device and the user equipment that has not been operated for a long time. User data deletion is deletion of user data from the VLR. Similarly, the tracking area updating may include normal tracking area registration, periodic tracking area registration, user data deletion, and the like. Details are not described herein.

For example, the user equipment performs the location area updating. The user equipment may send a location updating request (LOCATION UPDATING REQUEST) message to the network device and enter a location updating initiated (LOCATION UPDATING INITIATED) state. After receiving the location updating request message, the network device may perform the following actions: initiating an update procedure to obtain further information about the user equipment, for example, an encryption capability, initiating an identity request procedure, initiating an authentication procedure, initiating ciphering mode setting, and sending a location updating accept (LOCATION UPDATING ACCEPT) message to the user equipment when the network device accepts a location updating request of the user equipment, or sending a location updating reject (LOCATION UPDATING REJECT) message to the user equipment when the network device rejects a location updating request of the user equipment.

The ciphering mode setting initiated by the network device is implemented according to a security mode control (security mode control) procedure. The security mode control procedure is to trigger a ciphering or re-ciphering command for a radio bearer (radio bearer, RB) and all signaling radio bearers (signalling radio bearer, SRB) in one CN domain. This procedure may alternatively be used to initiate integrity protection or update integrity protection configuration for all the SRBs. To be specific, the security mode control procedure may include two security functions: data ciphering and data integrity protection, where the data integrity protection may include integrity check and integrity key management. Integrity protection is a function of a radio resource control (radio resource control, RRC) sublayer, and is performed on a signaling message transmitted on a radio link between the user equipment and the network device, to prevent the signaling message from being modified, added, deleted, or damaged. The network device may use a security mode command (SECURITY MODE COMMAND) message to activate integrity protection or modify a parameter of activated integrity protection for the user equipment in a specified domain. Refer to FIG. 3. It may be understood that FIG. 3 shows merely an example of a security mode control procedure, and constitutes no limitation on the security mode control procedure.

After the security mode control procedure is performed, if integrity protection is performed on the signaling message transmitted between the user equipment and the network device, a reject message (location updating reject message or tracking area update reject message) sent by the network device to the user equipment is integrity protected. In this case, the user equipment receives the reject message (location updating reject message or tracking area update reject message) that is integrity protected (corresponding to "successfully integrity checked reject message" in section 4.1.1.6A and "the message is integrity protected" in section 4.4.4.7 in 3GPP TS 24.008, and "the message is integrity protected" in section 5.5.3.2.5 in 3GPP TS 24.301). The reject message that is integrity protected may be referred to as an integrity protected reject message. The user equipment registers with an LA or a TA when performing location area updating or tracking area updating, and the user equipment receives an integrity protected reject message sent by the network device.

If the network device does not initiate the security mode control procedure, and integrity protection is not performed on the signaling message transmitted between the user equipment and the network device, a reject message (location updating reject message or tracking area update reject message) sent by the network device to the user equipment is not integrity protected. In this case, the user equipment receives the reject message (location updating reject message or tracking area update reject message) that is not integrity protected. The reject message that is not integrity protected is a non-integrity protected reject message (corresponding to "message without integrity protection" and "non-integrity protected reject messages" in section 4.1.1.6A in 3GPP TS 24.008, and "message without integrity protection" and "non-integrity protected reject messages" in section 5.3.7b in 3GPP TS 24.301). The user equipment registers with an LA or a TA when performing location area updating or tracking area updating, and the user equipment receives a non-integrity protected reject message sent by the network device.

The reject message (LOCATION UPDATING REJECT message or TRACKING AREA UPDATE REJECT message) sent by the network device to the user equipment carries a cause value (clause value) indicating that the network device rejects the location updating (location area updating or tracking area updating). Reject clause values correspond to different reject causes (clause). For example, some common reject causes for location area updating and tracking area updating are respectively shown in Table 1a and Table 1b. It may be understood that Table 1a shows merely an example of reject causes for the location area updating, Table 1b shows merely an example of reject causes for the tracking area updating, and Table 1a and Table 1b constitute no limitation on the reject causes for the location area updating and the tracking area updating.

**Table 1a**

| Clause value | Clause |
|---|---|
| #3/#6 | Illegal mobile station Illegal MS (mobile station)/Illegal user equipment Illegal UE |
| #11 | PLMN not allowed PLMN not allowed |
| #12 | Location area not allowed Location Area not allowed |
| #13 | Roaming not allowed in this location area Roaming not allowed in this location area |
| #15 | No suitable cells in this location area No Suitable Cells In Location Area |

**Table 1b**

| Clause value | Clause |
|---|---|
| #3/#6 | Illegal user equipment Illegal UE/Illegal mobile equipment Illegal ME (mobile equipment) |
| #7 | EPS devices not allowed EPS services not allowed |
| #8 | EPS devices and non-EPS devices not allowed EPS services and non-EPS services not allowed |
| #11/#35 | PLMN not allowed PLMN not allowed/Requested service option not authorized in this PLMN Requested services option not authorized in this PLMN |
| #12 | Tracking area not allowed Tracking area not allowed |
| #13 | Roaming not allowed in this tracking area Roaming not allowed in this tracking area |
| #14 | EPS devices not allowed in this PLMN EPS services not allowed in this PLMN |
| #15 | No suitable cells in this tracking area No suitable cells in tracking area |

The user equipment may include a list of forbidden location areas for roaming (a list of "forbidden location areas for roaming"), a list of forbidden location areas for regional provision of service (a list of "forbidden location areas for regional provision of service"), a list of forbidden tracking areas for roaming (a list of "forbidden tracking areas for roaming"), and a list of forbidden tracking areas for regional provision of service (a list of "forbidden tracking areas for regional provision of service"). In the following description, the list of forbidden location areas for roaming and the list of forbidden location areas for regional provision of service may be collectively referred to as a list of forbidden location areas, and the list of forbidden tracking areas for roaming and the list of forbidden tracking areas for regional provision of service may be collectively referred to as a list of forbidden tracking areas. Information in the list of forbidden location areas and the list of forbidden tracking areas may be deleted when the user equipment is powered off, or when a subscriber identification module (subscriber identification module, SIM) card/universal subscriber identity module (universal subscriber identity module, USIM) card is removed, or at a moment within 12 to 24 hours after the list of forbidden location areas and the list of forbidden tracking areas are created. When the user equipment receives, when registering with an LA or a TA, a reject message sent by the network device, the user equipment may add a current LAI or TAI to a corresponding forbidden list based on a clause value carried in the reject message and depending on whether the current reject message is an integrity protected reject message or a non-integrity protected reject message. For example, when the reject message received by the user equipment is integrity protected, for some examples of a correspondence between a clause value and an added-to forbidden list, refer to Table 2a and Table 2b. When the reject message received by the user equipment is not integrity protected, for some examples of a correspondence between a clause value and an added-to forbidden list, refer to Table 3a and Table 3b. It may be understood that Table 2a and Table 2b merely show some examples of the correspondence between a clause value and an added-to forbidden list when the user equipment receives an integrity protected reject message, and constitute no limitation on the correspondence between a clause value and an added-to forbidden list when the user equipment receives an integrity protected reject message. Table 3a and Table 3b merely show some examples of the correspondence between a clause value and an added-to forbidden list when the user equipment receives a non-integrity protected reject message, and constitute no limitation on the correspondence between a clause value and an added-to forbidden list when the user equipment receives a non-integrity protected reject message.

**Table 2a**

| Clause value | List |
|---|---|
| #12 | Forbidden location areas for regional provision of service |
| #13 and #15 | Forbidden location areas for roaming |

**Table 2b**

| Clause value | List |
|---|---|
| #12 | Forbidden tracking areas for regional provision of service |
| #13 and #15 | Forbidden tracking areas for roaming |

**Table 3a**

| Clause value | List |
|---|---|
| #12 | Forbidden location areas for regional provision of service |
| #3, #6, #13, #15, and #11 (on an HPLMN) | Forbidden location areas for roaming |

**Table 3b**

| Clause value | List |
|---|---|
| #12 | Forbidden location areas for regional provision of service |
| #3, #6, #7, #8, #13, #15, and #11/#14/#35 (on an HPLMN) | Forbidden location areas for roaming |

The user equipment may not attempt, based on the list of forbidden location areas and the list of forbidden tracking areas, to search for a suitable cell in an LA or a TA corresponding to a LAI or a TAI stored in the list of forbidden location areas and the list of forbidden tracking areas, or to select a PLMN corresponding to the LAI or the TAI.

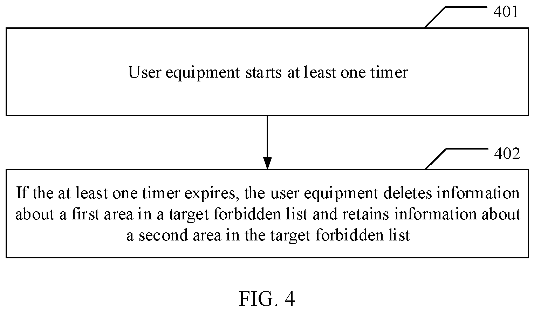

Referring to FIG. 4, an embodiment of an information maintenance control method in the embodiments of this application includes the following steps.

401: User equipment starts at least one timer.

In this embodiment, the user equipment may perform location updating, where the location updating may be location area updating or tracking area updating. This is not specifically limited herein. The location area updating or tracking area updating may be location area or tracking area registration performed after the user equipment is powered on and selects a PLMN and a cell, or area registration performed by the user equipment after the user equipment reselects a cell, where a location area or tracking area of the reselected cell is different from that of an original camped-on cell. This is not specifically limited herein.

When registering with a first area, the user equipment receives a non-integrity protected reject message. When registering with a second area, the user equipment receives an integrity protected reject message. The first area may be one or more areas. This is not specifically limited herein. The second area may be one or more areas. This is not specifically limited herein. The first area and the second area may be location areas, or the first area and the second area may be tracking areas. This is not specifically limited herein. In this embodiment and subsequent embodiments, that the first area and the second area are location areas is merely used as an example for description. Correspondingly, the user equipment performs location area updating, and the reject message sent by the network device and received by the user equipment is a location updating reject message.

The user equipment may start the at least one timer, where the at least one timer is used to indicate forbidden duration of an area in which the user equipment receives a non-integrity protected reject message during registration, and the at least one timer may be used to indicate forbidden duration of the first area. It may be understood that the user equipment may start one or more timers. This is not specifically limited herein.

It may be understood that the at least one timer may be started under a trigger condition. The user equipment may start the at least one timer after receiving a non-integrity protected reject message during location area registration, or the user equipment may start the at least one timer after receiving a non-integrity protected reject message in another process such as an attach process, or the user equipment may start the at least one timer because another timer expires. This is not specifically limited herein. In this embodiment and subsequent embodiments, that the user equipment starts the at least one timer after receiving the non-integrity protected reject message during location area registration is merely used as an example for description.

The timer may be T3247 (in corresponding protocols TS 24.008 and TS 24.301), or may be another timer in another protocol. This is not specifically limited herein. In this embodiment and subsequent embodiments, that the timer is T3247 is merely used as an example for description.

402: If the at least one timer expires, the user equipment deletes information about the first area in a target forbidden list and retains information about the second area in the target forbidden list.

In this embodiment, if the at least one timer described in step 401 expires, the user equipment may delete the information about the first area in the target forbidden list and retain the information about the second area in the target forbidden list. It may be understood that, after the user equipment receives the non-integrity protected reject message when registering with the first area, the user equipment may store the information about the first area into the target forbidden list; after the user equipment receives the integrity protected reject message when registering with the second area, the user equipment may store the information about the second area into the target forbidden list. Alternatively, the information about the first area and the information about the second area may not be stored into the target forbidden list by the user equipment in the foregoing description process, and the information about the first area and the information about the second area may be preconfigured in the target forbidden list. This is not specifically limited herein.

It may be understood that the target forbidden list may be a list of forbidden location areas, or may be a list of forbidden tracking areas. This is not specifically limited herein. In this embodiment and subsequent embodiments, that the target forbidden list is the list of forbidden location areas is merely used as an example for description.

In this embodiment, during network selection, the user equipment may not attempt, based on the information about the second area in the target forbidden list, to search for a PLMN and a cell corresponding to the second area.

In this embodiment, the user equipment starts the at least one timer, where the at least one timer is used to indicate the forbidden duration of the area in which the user equipment receives the non-integrity protected reject message during registration. If the at least one timer expires, the user equipment deletes the information about the first area in the target forbidden list and retains the information about the second area in the target forbidden list. When T3247 expires, the user equipment retains information, in the forbidden list, about an area in which the user equipment receives an integrity protected reject message during registration. In this way, the user equipment does not attempt to search for a cell or PLMN corresponding to the area. This reduces a quantity of invalid attempts of the user equipment on the network.

In this embodiment of this application, that the user equipment starts the at least one timer may be that the user equipment starts one timer, or may be that the user equipment starts at least two different timers: a first timer and a second timer. Details are separately described below.

### 1. User equipment starts one timer T3247.

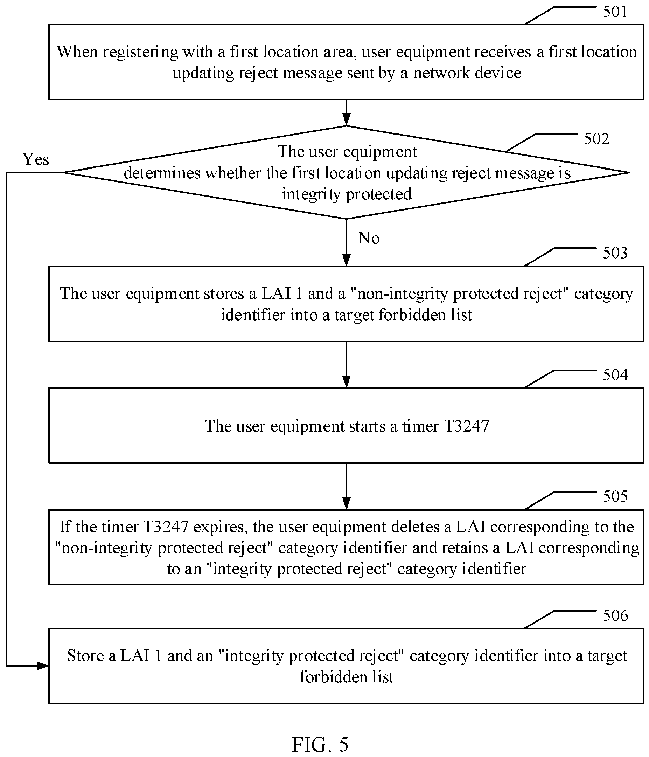

In this embodiment, the user equipment may start the timer T3247, and T3247 is configured to indicate forbidden duration of an area in which the user equipment receives a non-integrity protected reject message during registration. Specifically, referring to FIG. 5, another embodiment of an information maintenance control method in the embodiments of this application includes the following steps.

501: When registering with a first location area, the user equipment receives a first location updating reject message sent by a network device.

In this embodiment, the user equipment may perform location area updating. The location area updating may be location area registration performed after the user equipment is powered on and selects a PLMN and a cell, or location area registration performed by the user equipment after the user equipment reselects a cell, where a location area of the reselected cell is different from that of an original camped-on cell. This is not specifically limited herein. When registering with the first location area, a terminal receives the first location updating reject message sent by the network device. The first location updating reject message carries a clause value, where the clause value may be #3, #13, or #12. This is not specifically limited herein and depends on a current situation of the network device and the user equipment.

502: The user equipment determines whether the first location updating reject message is integrity protected. If no, perform step 503; or if yes, perform step 506.

In this embodiment, after receiving the first location updating reject message sent by the network device and described in step 501, the user equipment may store the clause value in the first location updating reject message, and determine whether the first location updating reject message is integrity protected. The user equipment may determine, according to a standard method, whether the network device and the user equipment undergo a security mode control procedure, to determine whether the first location updating reject message is an integrity protected reject message or a non-integrity protected reject message. Details are not described herein.

In this embodiment, if the user equipment determines that the first location updating reject message is integrity protected, perform step 506; or if the user equipment determines that the first location updating reject message is not integrity protected, perform step 503.

503: The user equipment stores a LAI 1 and a "non-integrity protected reject" category identifier into a target forbidden list.

In this embodiment, if the user equipment determines that the first location updating reject message is not integrity protected, that is, currently receives a non-integrity protected reject message sent by the network device, the user equipment may store information about the first location area and a first category identifier into the target forbidden list. The first category identifier is used to indicate that the user equipment receives, during area registration, the non-integrity protected reject message sent by the network device, and the first category identifier corresponds to the information about the first area.

The information about the first location area may be an identity of the first location area. The identity may be an identity that has a sequence and that is manually agreed on, or may be a unique identity specified in a protocol. This is not specifically limited herein. In this embodiment and subsequent embodiments, that the identity is a LAI is merely used as an example for description. In addition to the identity of the first location area, the information about the first location area may further include other content. This is not specifically limited herein. In this embodiment and subsequent embodiments, that the information about the first location area is the identity of the first location area is merely used as an example for description. In other words, the user equipment stores the LAI 1 into the target forbidden list.

The first category identifier may be a value, for example, 0 or 1, or the first category identifier may be a character string, for example, "non-integrity protected reject". It may be understood that the foregoing describes merely examples of the first category identifier, and constitutes no limitation on content and a form of the first category identifier. In this embodiment and subsequent embodiments, that the first category identifier is "non-integrity protected reject" is merely used as an example for description. In other words, the user equipment stores "non-integrity protected reject" into the target forbidden list. Refer to a target forbidden list shown in Table 4a. It may be understood that Table 4a shows merely an example of the target forbidden list, and constitutes no limitation on a form and content of the target forbidden list.

**Table 4a**

| | |
|---|---|
| LAI 1 | Non-integrity protected reject |
| LAI 2 | Integrity protected reject |
| LAI 3 | Non-integrity protected reject |
| LAI 4 | Integrity protected reject |

504: The user equipment starts the timer T3247.

If the user equipment determines that the first location updating reject message is not integrity protected, that is, receives the non-integrity protected reject message sent by the network device, the user equipment may start the timer T3247.

It may be understood that if the user equipment receives, after the timer T3247 has been started and when the user equipment registers with a location area, a non-integrity protected reject message sent by the network device, the user equipment may store a LAI of the location area and the first category identifier into the target forbidden list, and the user equipment does not restart the timer T3247. In other words, in this embodiment, step 504 is optional. If the timer T3247 has been started, the user equipment does not perform step 504.

In this embodiment, there is no fixed sequence of performing steps 503 and 504. Step 503 may be performed first, or step 504 may be performed first, or steps 503 and 504 may be simultaneously performed based on a situation. This is not specifically limited herein.

505: If the timer T3247 expires, the user equipment deletes a LAI corresponding to the "non-integrity protected reject" category identifier and retains a LAI corresponding to an "integrity protected reject" category identifier.

In this embodiment, when the timer T3247 expires, the user equipment may delete information in the target forbidden list based on the category identifier. The user equipment may delete the LAI corresponding to the "non-integrity protected reject" category identifier and retain the LAI corresponding to the "integrity protected reject" category identifier in the target forbidden list. Referring to a target forbidden list that is obtained after the information is deleted and is shown in Table 4b, in comparison with the target forbidden list shown in Table 4a, information corresponding to the LAI 1 and the LAI 3 that correspond to the "non-integrity protected reject" category identifier is deleted.

**Table 4b**

| | |
|---|---|
| LAI 2 | Integrity protected reject |
| LAI 4 | Integrity protected reject |

506: Store a LAI 1 and an "integrity protected reject" category identifier into a target forbidden list.

In this embodiment, if the user equipment determines that the first location updating reject message is integrity protected, the user equipment may store information, namely, the LAI 1, about the first location area and a second category identifier into the target forbidden list as described in step 503. The second category identifier is used to indicate that the user equipment receives, during area registration, an integrity protected reject message sent by the network device, and the second category identifier corresponds to the information about a second area. The second category identifier may be a value, for example, 0 or 1, or the second category identifier may be a character string, for example, "integrity protected reject". It may be understood that the foregoing describes merely examples of the second category identifier, and constitutes no limitation on content and a form of the second category identifier. In this embodiment and subsequent embodiments, that the second category identifier is "integrity protected reject" is merely used as an example for description. In other words, the user equipment stores "integrity protected reject" into the target forbidden list. For details, refer to Table 4a and Table 4b. It may be understood that Table 4a and Table 4b show merely examples of the target forbidden list, and constitute no limitation on a form and content of the target forbidden list.

In this embodiment, the user equipment starts at least one timer, where the at least one timer is used to indicate forbidden duration of an area in which the user equipment receives a non-integrity protected reject message during registration. If the at least one timer expires, the user equipment deletes information about a first area in the target forbidden list and retains information about a second area in the target forbidden list. When T3247 expires, the user equipment retains information, in the forbidden list, about an area in which the user equipment receives an integrity protected reject message during registration. In this way, the user equipment does not attempt to search for a cell or PLMN corresponding to the area. This reduces a quantity of invalid attempts of the user equipment on the network.

### 2. User equipment may start at least two different timers: a first timer and a second timer.

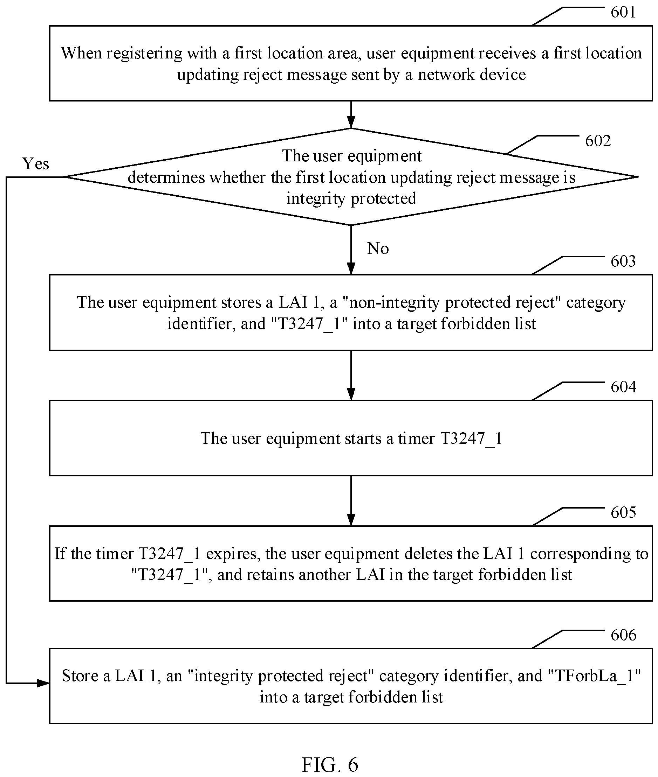

In this embodiment, the user equipment may start at least a first timer T3247_1 and a second timer T3247_2. T3247_1 is used to indicate forbidden duration of a first area in which the user equipment receives a non-integrity protected reject message during registration, and T3247_2 is used to indicate forbidden duration of a third area in which the user equipment receives a non-integrity protected reject message during registration. Specifically, referring to FIG. 6, still another embodiment of an information maintenance control method in the embodiments of this application includes the following steps.

In this embodiment, step 601 is similar to step 501 in FIG. 5. Details are not described herein again.

602: The user equipment determines whether the first location updating reject message is integrity protected. If yes, perform step 606; or if no, perform step 603.

In this embodiment, after receiving the first location updating reject message sent by the network device and described in step 601, the user equipment may store the clause value in the first location updating reject message, and determine whether the first location updating reject message is integrity protected. The user equipment may determine, according to a standard method, whether the network device and the user equipment undergo a security mode control procedure, to determine whether the first location updating reject message is an integrity protected reject message or a non-integrity protected reject message. Details are not described herein.

In this embodiment, if the user equipment determines that the first location updating reject message is integrity protected, perform step 606; or if the user equipment determines that the first location updating reject message is not integrity protected, perform step 603.

603: The user equipment stores a LAI 1, a "non-integrity protected reject" category identifier, and "T3247_1" into a target forbidden list.

The user equipment may store at least the timer T3247_1 and the timer T3247_2. Preferably, the user equipment may store more timers T3247 that may one-to-one correspond to LAs corresponding to a first category identifier in the target forbidden list. This is not specifically limited herein. In this embodiment and subsequent embodiments, that the user equipment stores sufficient timers T3247 that may one-to-one correspond to LAs corresponding to the first category identifier in the target forbidden list is merely used as an example for description.

In this embodiment, if the user equipment determines that the first location updating reject message is not integrity protected, that is, currently receives a non-integrity protected reject message sent by the network device, the user equipment may store the LAI 1 and the "non-integrity protected reject" category identifier into the target forbidden list, where "non-integrity protected reject" corresponds to the LAI 1.

The user equipment may select a scenario in which the timer T3247_1 corresponds to the first location area, and the user equipment may store an identifier of the timer T3247_1 into the target forbidden list, where the identifier of the timer T3247_1 is used to indicate the timer T3247_1 and corresponds to the LAI 1. The identifier of the timer T3247_1 may be a value, for example, 0, 1, or 2; or the identifier of the timer T3247 may be a character string, for example, "T3247_1". This is not specifically limited herein. In this embodiment and subsequent embodiments, that the identifier of the timer T3247_1 is "T3247_1" is merely used as an example for description. Similarly, an identifier of the timer T3247_2 is "T3247_2", and an identifier of a timer T3247_3 is "T3247_3". Details are not described herein. It may be understood that the user equipment may not store the identifier of the timer into the target forbidden list, and the user equipment may store the identifier of the timer T3247_1 in another form, or the user equipment may store a correspondence between the timer T3247_1 and the first location area in another form. This is not specifically limited herein. In this embodiment and subsequent embodiments, that the user equipment stores the identifier of the timer T3247_1 into the target forbidden list is merely used as an example for description. Refer to another target forbidden list shown in Table 5a. It may be understood that Table 5a shows merely an example of the target forbidden list, and constitutes no limitation on a form and content of the target forbidden list.

**Table 5a**

| | | |
|---|---|---|
| LAI 1 | Non-integrity protected reject | T3247_1 |
| LAI 2 | Integrity protected reject | TForbLa_1 |
| LAI 3 | Non-integrity protected reject | T3247_2 |
| LAI 4 | Integrity protected reject | TForbLa_2 |

604: The user equipment starts the timer T3247_1.

If the user equipment determines that the first location updating reject message is not integrity protected, that is, currently receives the non-integrity protected reject message sent by the network device, the user equipment may determine that a timer corresponding to the first location area is the timer T3247_1, and the user equipment may start the timer T3247_1.

It may be understood that if the user equipment receives, after the timer T3247_1 has been started and when the user equipment registers with another location area, a non-integrity protected reject message sent by the network device, the user equipment may store a LAI of the location area and the first category identifier into the target forbidden list, the user equipment may determine that a timer corresponding to the location area is the timer T3247_2, the user equipment may store the identifier "T3247_2" of the timer T3247_2 into the target forbidden list, and the user equipment may start the timer T3247_2.

In this embodiment, there is no fixed sequence of performing steps 603 and 604. Step 603 may be performed first, or step 604 may be performed first, or steps 603 and 604 may be simultaneously performed based on a situation. This is not specifically limited herein.

605: If the timer T3247_1 expires, the user equipment deletes the LAI 1 corresponding to "T3247_1", and retains another LAI in the target forbidden list.

In this embodiment, when the timer T3247_1 expires, the user equipment queries the target forbidden list based on the timer identifier of the timer T3247_1, and determines that the first location area corresponds to the timer T3247_1. The user equipment may delete the LAI 1 in the target forbidden list and retain a LAI corresponding to an "integrity protected reject" category identifier in the target forbidden list. In addition, if another timer does not expire, the user equipment may retain a LAI corresponding to the another timer in the target forbidden list. Referring to another target forbidden list that is obtained after information is deleted and is shown in Table 5b, in comparison with Table 5a, only information corresponding to the LAI 1 is deleted.

**Table 5b**

| | | |
|---|---|---|
| LAI 2 | Integrity protected reject | TForbLa_1 |
| LAI 3 | Non-integrity protected reject | T3247_2 |
| LAI 4 | Integrity protected reject | TForbLa_2 |

606: The user equipment stores a LAI 1, an "integrity protected reject" category identifier, and "TForbLa_1" into a target forbidden list.

In this embodiment, if the user equipment determines that the first location updating reject message is integrity protected, the user equipment may store the LAI 1 and the "integrity protected reject" category identifier into the target forbidden list as described in step 603. The "integrity protected reject" category identifier is used to indicate that the user equipment receives, during area registration, an integrity protected reject message sent by the network device, and "integrity protected reject" corresponds to the LAI 1.

The user equipment may store a timer TForbLa, where the timer TForbLa is used to indicate forbidden duration of an area in which the user equipment receives an integrity protected reject message during registration. The user equipment may store one or more timers TForbLa. This is not specifically limited herein. The timer TForbLa may one-to-one correspond to an LA corresponding to a second category identifier in the target forbidden list. Duration of the timer TForbLa may be 12 to 24 hours. This is not specifically limited herein. In this embodiment and subsequent embodiments, that the user equipment stores sufficient timers TForbLa that may one-to-one correspond to LAs corresponding to the second category identifier in the target forbidden list is merely used as an example for description.

In this embodiment, if the user equipment determines that the first location updating reject message is integrity protected, that is, currently receives an integrity protected reject message sent by the network device, the user equipment may store the LAI 1 and the "integrity protected reject" category identifier into the target forbidden list, where "integrity protected reject" corresponds to the LAI 1.

The user equipment may select a scenario in which a timer TForbLa_1 corresponds to the first location area, and the user equipment may store an identifier of the timer TForbLa_1 into the target forbidden list, where the identifier of the timer TForbLa_1 is used to indicate the timer TForbLa_1 and corresponds to the LAI 1. The identifier of the timer TForbLa_1 may be a value, for example, 0, 1, or 2, or the identifier of the timer TForbLa_1 may be a character string, for example, "TForbLa_1 ". This is not specifically limited herein. In this embodiment and subsequent embodiments, that the identifier of the timer TForbLa_1 is "TForbLa_1" is merely used as an example for description. Similarly, an identifier of a timer TForbLa_2 is "TForbLa_2", and an identifier of a timer TForbLa_3 is "TForbLa_3". Details are not described herein. It may be understood that the user equipment may not store the identifier of the timer into the target forbidden list, and the user equipment may store the identifier of the timer TForbLa_1 in another form, or the user equipment may store a correspondence between the timer TForbLa_1 and the first location area in another form. This is not specifically limited herein. In this embodiment and subsequent embodiments, that the user equipment stores the identifier of the timer TForbLa_1 into the target forbidden list is merely used as an example for description. For details, refer to Table 5a and Table 5b. It may be understood that Table 5a and Table 5b show merely examples of the target forbidden list, and constitute no limitation on a form and content of the target forbidden list.

In this embodiment, the user equipment starts the at least two different timers: the first timer T3247_1 and the second timer T32472. The first timer is used to indicate the forbidden duration of the first area in which the user equipment receives the non-integrity protected reject message during registration, and the second timer is used to indicate the forbidden duration of the third area in which the user equipment receives the non-integrity protected reject message during registration. If the first timer expires, the user equipment deletes information about the first area in the target forbidden list and retains information about a second area in the target forbidden list. When T3247_1 expires, the user equipment retains information, in the forbidden list, about an area in which the user equipment receives an integrity protected reject message during registration. In this way, the user equipment does not search for a cell or PLMN corresponding to the area. This reduces a quantity of invalid attempts of the user equipment on the network. When T3247_1 expires but T3247_2 does not expire, the user equipment retains information, in the forbidden list, about the third area in which the user equipment receives the non-integrity protected reject message during registration. This can avoid excessively short penalty duration of the third area caused by deleting the information about the third area in advance.

In the embodiments of this application, the user equipment may alternatively include two forbidden lists: a first forbidden list and a second forbidden list. The first forbidden list is used to store information about an area in which the user equipment receives a non-integrity protected reject message during registration, and the second forbidden list is used to store information about an area in which the user equipment receives an integrity protected reject message during registration. The first forbidden list and the second forbidden list may be lists of forbidden location areas, or the first forbidden list and the second forbidden list may be lists of forbidden tracking areas. This is not specifically limited herein. In subsequent embodiments, that the first forbidden list and the second forbidden list are lists of forbidden location areas is merely used as an example for description. To be specific, the user equipment may maintain another list of forbidden location areas in addition to an original list of forbidden location areas. Similarly, when maintaining the first forbidden list and the second forbidden list, the user equipment starts at least one timer. The user equipment may start one timer, or may start at least two different timers: a first timer and a second timer. Details are separately described below.

### 3. User equipment maintains a first forbidden list and a second forbidden list, and the user equipment starts one timer T3247.

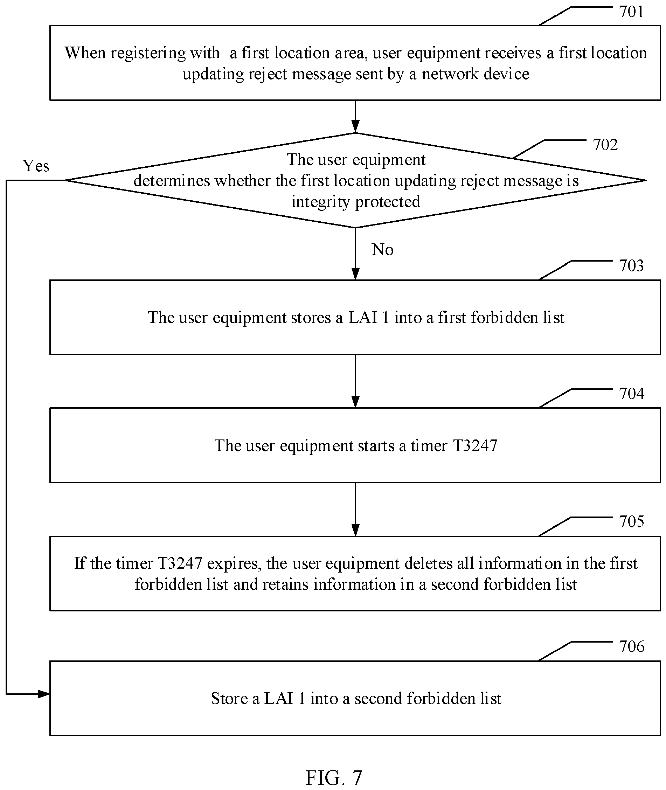

In this embodiment, the user equipment may maintain the first forbidden list and the second forbidden list, and the user equipment may start the timer T3247. T3247 is used to indicate forbidden duration of an area in which the user equipment receives a non-integrity protected reject message during registration. Specifically, referring to FIG. 7, yet another embodiment of an information maintenance control method in the embodiments of this application includes the following steps.

In this embodiment, step 701 is similar to step 501 in FIG. 5. Details are not described herein again.

702: The user equipment determines whether the first location updating reject message is integrity protected. If yes, perform step 706; or if no, perform step 703.

In this embodiment, after receiving the first location updating reject message sent by the network device and described in step 701, the user equipment may store the clause value in the first location updating reject message, and determine whether the first location updating reject message is integrity protected. The user equipment may determine, according to a standard method, whether the network device and the terminal device undergo a security mode control procedure, to determine whether the first location updating reject message is an integrity protected reject message or a non-integrity protected reject message. Details are not described herein.

In this embodiment, if the user equipment determines that the first location updating reject message is integrity protected, perform step 706; or if the user equipment determines that the first location updating reject message is not integrity protected, perform step 703.

703: The user equipment stores a LAI 1 into the first forbidden list.

In this embodiment, if the user equipment determines that the first location updating reject message is not integrity protected, that is, currently receives a non-integrity protected reject message sent by the network device, the user equipment may store the LAI 1 into the first forbidden list. Refer to a first forbidden list shown in Table 6. It may be understood that Table 6 shows merely an example of the first forbidden list, and constitutes no limitation on a form and content of the first forbidden list.

**Table 6**

| |
|---|
| LAI 1 |
| LAI 2 |
| LAI 3 |
| LAI 4 |

In this embodiment, step 704 is similar to step 504 in FIG. 5. Details are not described herein again.

It may be understood that if the user equipment receives, after the timer T3247 has been started and when the user equipment registers with a location area, a non-integrity protected reject message sent by the network device, the user equipment may store a LAI of the location area into the first forbidden list, and the user equipment does not restart the timer T3247. In other words, in this embodiment, step 704 is optional. If the timer T3247 has been started, the user equipment does not perform step 704.

In this embodiment, there is no fixed sequence of performing steps 703 and 704. Step 703 may be performed first, or step 704 may be performed first, or steps 703 and 704 may be simultaneously performed based on a situation. This is not specifically limited herein.

705: If the timer T3247 expires, the user equipment deletes all information in the first forbidden list and retains information in the second forbidden list.

In this embodiment, when the timer T3247 expires, the user equipment may delete all the information in the first forbidden list and retain the information in the second forbidden list.

706: Store a LAI 1 into the second forbidden list.

In this embodiment, if the user equipment determines that the first location updating reject message is integrity protected, the user equipment may store the LAI 1 of the first location area into the second forbidden list as described in step 703.

In this embodiment, the user equipment starts at least one timer, where the at least one timer is used to indicate forbidden duration of an area in which the user equipment receives a non-integrity protected reject message during registration. If the at least one timer expires, the user equipment deletes information about a first area in the first forbidden list and retains information about a second area in the second forbidden list. When T3247 expires, the user equipment retains information, in the forbidden list, about an area in which the user equipment receives an integrity protected reject message during registration. In this way, the user equipment does not attempt to search for a cell or PLMN corresponding to the area. This reduces a quantity of invalid attempts of the user equipment on the network.

### 4. User equipment maintains a first forbidden list and a second forbidden list, and the user equipment may start at least two different timers: a first timer and a second timer.

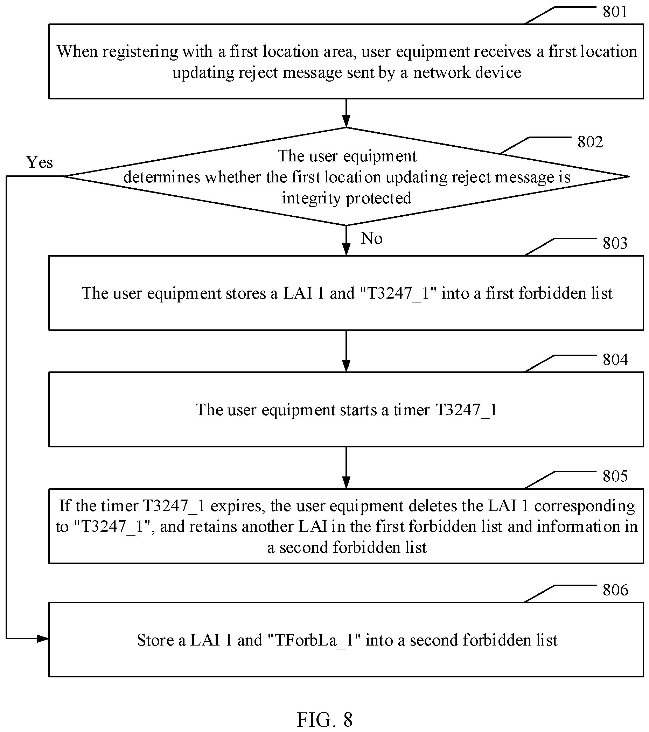

In this embodiment, the user equipment may maintain the first forbidden list and the second forbidden list, and the user equipment may start at least a first timer T3247_1 and a second timer T32472. T3247_1 is used to indicate forbidden duration of a first area in which the user equipment receives a non-integrity protected reject message during registration, and T3247_2 is used to indicate forbidden duration of a third area in which the user equipment receives a non-integrity protected reject message during registration. Specifically, referring to FIG. 8, still yet another embodiment of an information maintenance control method in the embodiments of this application includes the following steps.

In this embodiment, step 801 is similar to step 501 in FIG. 5. Details are not described herein again.

802: The user equipment determines whether the first location updating reject message is integrity protected. If yes, perform step 806; or if no, perform step 803.

In this embodiment, after receiving the first location updating reject message sent by the network device and described in step 801, the user equipment may store the clause value in the first location updating reject message, and determine whether the first location updating reject message is integrity protected. The user equipment may determine, according to a standard method, whether the network device and the user equipment undergo a security mode control procedure, to determine whether the first location updating reject message is an integrity protected reject message or a non-integrity protected reject message. Details are not described herein.

In this embodiment, if the user equipment determines that the first location updating reject message is integrity protected, perform step 806; or if the user equipment determines that the first location updating reject message is not integrity protected, perform step 803.

803: The user equipment stores a LAI 1 and "T3247_1" into the first forbidden list.

In this embodiment, if the user equipment determines that the first location updating reject message is not integrity protected, that is, currently receives a non-integrity protected reject message sent by the network device, the user equipment may store the LAI 1 into the first forbidden list.

The user equipment may select a scenario in which the timer T3247_1 corresponds to the first location area, store an identifier of the timer "T3247_1" into the first forbidden list, and store a correspondence between the first location area and the timer T3247_1. Refer to another first forbidden list shown in Table 7a. It may be understood that Table 7a shows merely an example of the first forbidden list, and constitutes no limitation on a form and content of the first forbidden list.

**Table 7a**

| | |
|---|---|
| LAI 1 | T3247_1 |
| LAI 2 | T3247_2 |
| LAI 3 | T3247_3 |
| LAI 4 | T3247_4 |

804: The user equipment starts the timer T3247_1.

In this embodiment, step 804 is similar to step 604 in FIG. 6. Details are not described herein again.

It may be understood that if the user equipment receives, after the timer T3247_1 has been started and when the user equipment registers with another location area, a non-integrity protected reject message sent by the network device, the user equipment may store a LAI of the location area into the first forbidden list, the user equipment may determine that a timer corresponding to the location area is the timer T3247_2, the user equipment may store an identifier "T3247_2" of the timer T3247_2 into the first forbidden list, and the user equipment may start the timer T3247_2.

In this embodiment, there is no fixed sequence of performing steps 803 and 804. Step 803 may be performed first, or step 804 may be performed first, or steps 803 and 804 may be simultaneously performed based on a situation. This is not specifically limited herein.

805: If the timer T3247_1 expires, the user equipment deletes the LAI 1 corresponding to "T3247_1", and retains another LAI in the first forbidden list and information in the second forbidden list.

In this embodiment, when the timer T3247_1 expires, the user equipment queries the first forbidden list based on the timer identifier of the timer T3247_1, and determines that the first location area corresponds to the timer T3247_1. The user equipment may delete the LAI 1 in the first forbidden list and retain another LAI in the second forbidden list. In addition, if another timer does not expire, the user equipment may retain a LAI corresponding to the another timer in the first forbidden list. Referring to a first forbidden list that is obtained after information is deleted and is shown in Table 7b, in comparison with Table 7a, only information corresponding to the LAI 1 is deleted.

**Table 7b**

| | |
|---|---|
| LAI 2 | T3247_2 |
| LAI 3 | T3247_3 |
| LAI 4 | T3247_4 |

806: The user equipment stores a LAI 1 and "TForbLa_1" into the second forbidden list.

In this embodiment, if the user equipment determines that the first location updating reject message is integrity protected, the user equipment may store the LAI 1 into the second forbidden list as described in step 803.

The user equipment may select a scenario in which a timer TForbLa_1 corresponds to the first location area, and store an identifier of the timer "TForbLa_1" into the second forbidden list.

In this embodiment, the user equipment starts the at least two different timers: the first timer T3247_1 and the second timer T32472. The first timer is used to indicate the forbidden duration of the first area in which the user equipment receives the non-integrity protected reject message during registration, and the second timer is used to indicate the forbidden duration of the third area in which the user equipment receives the non-integrity protected reject message during registration. If the first timer expires, the user equipment deletes information about the first area in the first forbidden list and retains information about a second area in the second forbidden list. When T3247_1 expires, the user equipment retains information, in the forbidden list, about an area in which the user equipment receives an integrity protected reject message during registration. In this way, the user equipment does not search for a cell or PLMN corresponding to the area. This reduces a quantity of invalid attempts of the user equipment on the network. When T3247_1 expires but T3247_2 does not expire, the user equipment retains information, in the forbidden list, about the third area in which the user equipment receives the non-integrity protected reject message during registration. This can avoid excessively short penalty duration of the third area caused by deleting the information about the third area in advance.

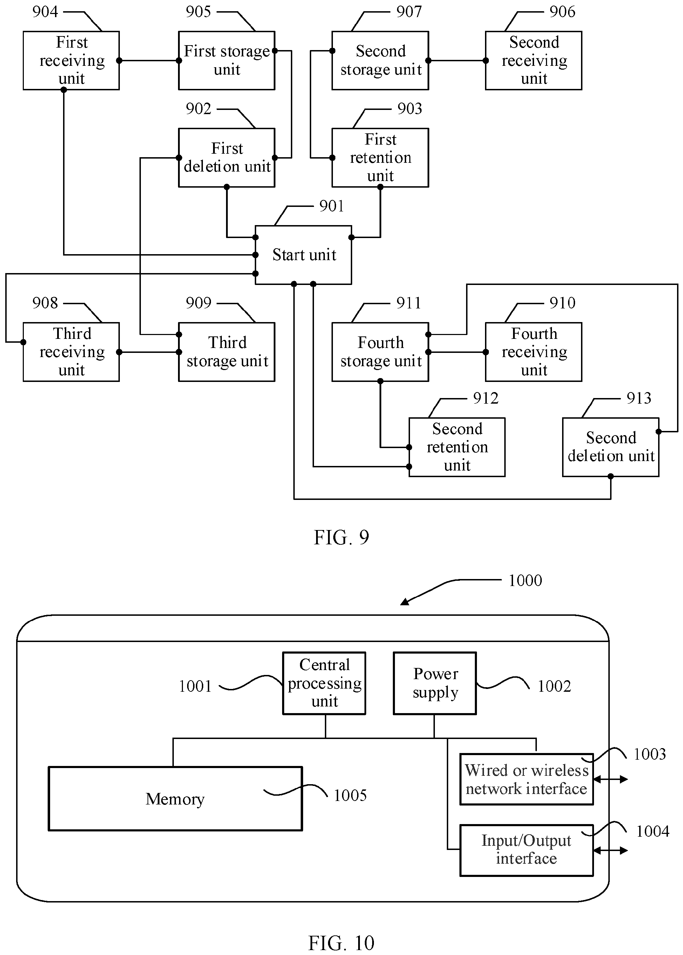

The foregoing describes the information maintenance control method in the embodiments of this application, and the following describes user equipment in the embodiments of this application. Referring to FIG. 9, an embodiment of user equipment in the embodiments of this application includes:
a start unit 901, configured to start at least one timer, where the at least one timer is used to indicate forbidden duration of an area in which the user equipment receives a non-integrity protected reject message during registration;
a first deletion unit 902, configured to delete information about a first area in a target forbidden list if the at least one timer expires; and
a first retention unit 903, configured to retain information about a second area in the target forbidden list if the at least one timer expires, where the first area is the area in which the user equipment receives the non-integrity protected reject message during registration, and the second area is an area in which the user equipment receives an integrity protected reject message during registration.

In this embodiment, a procedure executed by each unit in the user equipment is similar to the method procedures executed by the user equipment described in the embodiments shown in FIG. 5 to FIG. 8. Details are not described herein again.

In this embodiment, the start unit 901 starts the at least one timer, where the at least one timer is used to indicate the forbidden duration of the area in which the user equipment receives the non-integrity protected reject message during registration. If the at least one timer expires, the first deletion unit 902 deletes the information about the first area in the target forbidden list, and the first retention unit 903 retains the information about the second area in the target forbidden list. When T3247 expires, the first retention unit 903 retains information, in the forbidden list, about the area in which the user equipment receives the integrity protected reject message during registration. In this way, the user equipment does not attempt to search for a cell or PLMN corresponding to the area. This reduces a quantity of invalid attempts of the user equipment on the network.

In this embodiment, the user equipment further includes:
a first receiving unit 904, configured to: when the user equipment registers with the first area, receive the non-integrity protected reject message sent by a network device; and
a first storage unit 905, configured to store the information about the first area and a first category identifier into the target forbidden list based on the non-integrity protected reject message, where the first category identifier is used to indicate that the user equipment receives, during area registration, the non-integrity protected reject message sent by the network device, and the first category identifier corresponds to the information about the first area.

In this embodiment, the user equipment further includes:
a second receiving unit 906, configured to: when the user equipment registers with the second area, receive the integrity protected reject message sent by a network device; and
a second storage unit 907, configured to store the information about the second area and a second category identifier into the target forbidden list based on the integrity protected reject message, where the second category identifier is used to indicate that the user equipment receives, during area registration, the integrity protected reject message sent by the network device, and the second category identifier corresponds to the information about the second area.

In this embodiment, that the start unit 901 starts the at least one timer may be specifically that the start unit 901 starts a first timer and the start unit 901 starts a second timer.

In this embodiment, the user equipment further includes:
a third receiving unit 908, configured to: when the user equipment registers with the first area, receive a first non-integrity protected reject message sent by a network device; and
a third storage unit 909, configured to store the information about the first area, a first category identifier, and an identifier of the first timer into the target forbidden list based on the first non-integrity protected reject message, where the first category identifier is used to indicate that the user equipment receives, during area registration, the non-integrity protected reject message sent by the network device, the first category identifier corresponds to the information about the first area, the identifier of the first timer is used to indicate the first timer, and the identifier of the first timer corresponds to the information about the first area.

In this embodiment, the user equipment further includes:
a fourth receiving unit 910, configured to: when the user equipment registers with the third area, receive a second non-integrity protected reject message sent by the network device; and
a fourth storage unit 911, configured to store information about the third area, the first category identifier, and an identifier of the second timer into the target forbidden list based on the second non-integrity protected reject message, where the first category identifier corresponds to the information about the third area, the identifier of the second timer is used to indicate the second timer, and the identifier of the second timer corresponds to the information about the third area.

In this embodiment, the user equipment further includes:
a second retention unit 912, configured to: if the first timer expires but the second timer does not expire, retain the information about the third area in the target forbidden list based on the second timer; or
a second deletion unit 913, configured to: if the first timer expires and the second timer expires, delete the information about the third area in the target forbidden list based on the second timer.

Referring to FIG. 10, another embodiment of user equipment in the embodiments of this application includes:

The user equipment 1000 may have a relatively large difference due to different configurations or performance, and may include one or more central processing units (central processing units, CPU) 1001 (for example, one or more processors) and a memory 1005. The memory 1005 stores data or one or more application programs.

The memory 1005 may be a volatile memory or a persistent memory. The one or more programs stored in the memory 1005 may include one or more modules, and each module may include a series of instruction operations for a server. Further, the central processing unit 1001 may be configured to communicate with the memory 1005, to perform, on the server 1000, a series of instruction operations in the memory 1005.

The user equipment 1000 may further include one or more power supplies 1002, one or more wired or wireless network interfaces 1003, one or more input/output interfaces 1004, and/or one or more operating systems such as Windows ServerTM, Mac OS XTM, UnixTM, LinuxTM, and FreeBSDTM.

A procedure executed by the central processing unit 1001 in the user equipment 1000 in this embodiment is similar to the method procedures described in the embodiments shown in FIG. 5 to FIG. 8. Details are not described herein again.

An embodiment of this application further provides a computer storage medium. The computer storage medium is configured to store a computer software instruction used by the foregoing user equipment, and the computer software instruction includes a program designed for the user equipment.

An embodiment of this application further provides a computer program product. The computer program product includes a computer software instruction. The computer software instruction may be loaded by a processor to implement the method procedures in the embodiments shown in FIG. 5 to FIG. 8.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. An information maintenance control method, comprising:
starting, by user equipment, at least one timer, wherein the at least one timer is used to indicate forbidden duration of an area in which the user equipment receives a non-integrity protected reject message during registration; and
deleting, by the user equipment, information about a first area in a target forbidden list and retaining information about a second area in the target forbidden list if the at least one timer expires, wherein the first area is the area in which the user equipment receives the non-integrity protected reject message during registration, and the second area is an area in which the user equipment receives an integrity protected reject message during registration.

2. The method according to claim 1, wherein before the starting, by user equipment, at least one timer, the method further comprises:
when registering with the first area, receiving, by the user equipment, the non-integrity protected reject message sent by a network device; and
before the deleting, by the user equipment, information about a first area in a target forbidden list and retaining information about a second area in the target forbidden list if the at least one timer expires, the method further comprises:
storing, by the user equipment, the information about the first area and a first category identifier into the target forbidden list based on the non-integrity protected reject message, wherein the first category identifier is used to indicate that the user equipment receives, during area registration, the non-integrity protected reject message sent by the network device, and the first category identifier corresponds to the information about the first area.

3. The method according to claim 1, wherein before the deleting, by the user equipment, information about a first area in a target forbidden list and retaining information about a second area in the target forbidden list if the at least one timer expires, the method further comprises:
when registering with the second area, receiving, by the user equipment, the integrity protected reject message sent by a network device; and
storing, by the user equipment, the information about the second area and a second category identifier into the target forbidden list based on the integrity protected reject message, wherein the second category identifier is used to indicate that the user equipment receives, during area registration, the integrity protected reject message sent by the network device, and the second category identifier corresponds to the information about the second area.

4. The method according to claim 1, wherein the at least one timer comprises a first timer and a second timer, the first timer is used to indicate forbidden duration of the first area, and the second timer is used to indicate forbidden duration of a third area in which the user equipment receives a non-integrity protected reject message during registration.

5. The method according to claim 4, wherein the starting, by user equipment, at least one timer comprises:
starting, by the user equipment, the first timer; and
starting, by the user equipment, the second timer;
before the starting, by the user equipment, the first timer, the method further comprises:
when registering with the first area, receiving, by the user equipment, a first non-integrity protected reject message sent by a network device;
if the first timer expires, before the deleting, by the user equipment, information about a first area in a target forbidden list and retaining information about a second area in the target forbidden list, the method further comprises:
storing, by the user equipment, the information about the first area, a first category identifier, and an identifier of the first timer into the target forbidden list based on the first non-integrity protected reject message, wherein the first category identifier is used to indicate that the user equipment receives, during area registration, the non-integrity protected reject message sent by the network device, the first category identifier corresponds to the information about the first area, the identifier of the first timer is used to indicate the first timer, and the identifier of the first timer corresponds to the information about the first area;
before the starting, by the user equipment, the second timer, the method further comprises:
when registering with the third area, receiving, by the user equipment, a second non-integrity protected reject message sent by the network device; and
if the first timer expires, before the deleting, by the user equipment, information about a first area in a target forbidden list and retaining information about a second area in the target forbidden list, the method further comprises:
storing, by the user equipment, information about the third area, the first category identifier, and an identifier of the second timer into the target forbidden list based on the second non-integrity protected reject message, wherein the first category identifier corresponds to the information about the third area, the identifier of the second timer is used to indicate the second timer, and the identifier of the second timer corresponds to the information about the third area.

6. The method according to claim 5, wherein the method further comprises:
if the first timer expires but the second timer does not expire, retaining, by the user equipment, the information about the third area in the target forbidden list based on the second timer; or
if the first timer expires and the second timer expires, deleting, by the user equipment, the information about the third area in the target forbidden list based on the second timer.

7. User equipment, comprising:
a start unit, configured to start at least one timer, wherein the at least one timer is used to indicate forbidden duration of an area in which the user equipment receives a non-integrity protected reject message during registration;
a first deletion unit, configured to delete information about a first area in a target forbidden list if the at least one timer expires; and
a first retention unit, configured to retain information about a second area in the target forbidden list if the at least one timer expires, wherein the first area is the area in which the user equipment receives the non-integrity protected reject message during registration, and the second area is an area in which the user equipment receives an integrity protected reject message during registration.

8. The user equipment according to claim 7, wherein the user equipment further comprises:
a first receiving unit, configured to: when the user equipment registers with the first area, receive the non-integrity protected reject message sent by a network device; and
a first storage unit, configured to store the information about the first area and a first category identifier into the target forbidden list based on the non-integrity protected reject message, wherein the first category identifier is used to indicate that the user equipment receives, during area registration, the non-integrity protected reject message sent by the network device, and the first category identifier corresponds to the information about the first area.

9. The user equipment according to claim 7, wherein the user equipment further comprises:
a second receiving unit, configured to: when the user equipment registers with the second area, receive the integrity protected reject message sent by a network device; and
a second storage unit, configured to store the information about the second area and a second category identifier into the target forbidden list based on the integrity protected reject message, wherein the second category identifier is used to indicate that the user equipment receives, during area registration, the integrity protected reject message sent by the network device, and the second category identifier corresponds to the information about the second area.

10. The user equipment according to claim 7, wherein the at least one timer comprises a first timer and a second timer, the first timer is used to indicate forbidden duration of the first area, and the second timer is used to indicate forbidden duration of a third area in which the user equipment receives a non-integrity protected reject message during registration;
the start unit is specifically configured to start the first timer and start the second timer;
the user equipment further comprises:
a third receiving unit, configured to: when the user equipment registers with the first area, receive a first non-integrity protected reject message sent by a network device; and
a third storage unit, configured to store the information about the first area, a first category identifier, and an identifier of the first timer into the target forbidden list based on the first non-integrity protected reject message, wherein the first category identifier is used to indicate that the user equipment receives, during area registration, the non-integrity protected reject message sent by the network device, the first category identifier corresponds to the information about the first area, the identifier of the first timer is used to indicate the first timer, and the identifier of the first timer corresponds to the information about the first area; and
the user equipment further comprises:
a fourth receiving unit, configured to: when the user equipment registers with the third area, receive a second non-integrity protected reject message sent by the network device; and
a fourth storage unit, configured to store information about the third area, the first category identifier, and an identifier of the second timer into the target forbidden list based on the second non-integrity protected reject message, wherein the first category identifier corresponds to the information about the third area, the identifier of the second timer is used to indicate the second timer, and the identifier of the second timer corresponds to the information about the third area.

11. The user equipment according to claim 10, wherein the user equipment further comprises:
a second retention unit, configured to: if the first timer expires but the second timer does not expire, retain the information about the third area in the target forbidden list based on the second timer; or
a second deletion unit, configured to: if the first timer expires and the second timer expires, delete the information about the third area in the target forbidden list based on the second timer.

12. User equipment, comprising:
a memory, configured to store a program; and
a processor, configured to execute the program stored in the memory, wherein when the program is executed, the processor is configured to perform the steps according to any one of claims 1 to 6.

13. A computer-readable storage medium, comprising an instruction, wherein when the instruction is run on a computer, the computer is enabled to perform the method according to any one of claims 1 to 6.
